# EUROPÄISCHE PATENTSCHRIFT

(11) **EP 0 469 329 B1**
(45) Veröffentlichungstag und Bekanntmachung des Hinweises auf die Patenterteilung: **22.02.1995**
(21) Anmeldenummer: 91111164.9
(22) Anmeldetag: 04.07.1991
(51) Int. Cl.: B62K 19/34

(54) **Tretlagereinheit für Fahrräder**
Crank bearing unit for bicycles
Ensemble de pédalier pour bicyclettes

(30) Priorität: 01.08.1990 DE 4024426
(43) Veröffentlichungstag der Anmeldung: 05.02.1992
(73) Patentinhaber: Schmitt, Robert, D-97422 Schweinfurt (DE)
(72) Erfinder: Schmitt, Robert, D-97422 Schweinfurt (DE)
(74) Vertreter: Englaender, Klaus, Dipl.-Ing.

(56) Entgegenhaltungen:
- DE-U- 8 531 659
- DE-U- 8 708 234
- FR-A- 539 284
- FR-A- 2 454 952
- JP-U- 1 180 393

## Beschreibung

Die vorliegende Erfindung betrifft eine Tretlagereinheit der im Oberbegriff des Anspruches 1 genannten Art.

Derartige Tretlagereinheiten werden in im wesentlichen hülsenförmige, einen Teil des Fahrradrahmens bildende Tretlagergehäuse eingebaut. Dazu wird die Tretlagereinheit im allgemeinen weitgehend vormontiert, so daß die Tretlagerwelle bereits im Lageraußenring gelagert und eine Adapterbuchse auf ein Ende des Lageraußenringes gesetzt ist. Die so vorbereitete Tretlagereinheit wird von einer Seite in das Tretlagergehäuse eingebracht, wobei der axiale Buchsenabschnitt der vormontierten Adapterbuchse in das Tretlagergehäuse eingepreßt oder eingeschraubt werden kann. Anschließend wird die zweite Adapterbuchse auf die andere Seite der Tretlagereinheit aufgesetzt und ebenfalls in das zugeordnete Ende des Tretlagergehäuses eingepreßt bzw. eingeschraubt.

Die Hauptprobleme bei Tretlagereinheiten der im Oberbegriff des Anspruches 1 beschriebenen Art bestehen einerseits darin, diese an Tretlagergehäuse unterschiedlicher Länge anzupassen und andererseits darin, die Wälzlagerringe wirksam und dauerhaft gegen Eindringen von Schmutz, Feuchtigkeit oder dergleichen abzudichten.

Es ist bereits eine Tretlagereinheit der im Oberbegriff des Anspruches 1 genannten Art bekannt, bei der der Lageraußenring in seinen beiden Endbereichen nach außen aufgeweitet ist und jeweils eine Schulter bildet, hinter die an der Vorderseite des axialen Buchsenabschnittes der Adapterbuchse ausgebildete Nasen oder dergleichen einschnappen können, um die Adapterbuchse axial gegenüber dem Außenring zu sichern (DE-U-85 31 659.8). Da zusätzlich auch die Ringschulter der Adapterbuchse an der Stirnseite des Lageraußenringes und der Außenflansch am Tretlagergehäuse anliegen, ergibt sich für die axiale Positionierung der Adapterbuchse eine Überbestimmung, was eine hohe Herstellungsgenauigkeit für diese beiden Teile erfordert. Unvermeidliche Abmessungstoleranzen der Tretlagergehäuse oder eine Fehlstellung des Tretlagers und damit der Kettenlinie können außerdem nicht ohne weiteres durch Bearbeitung der Adapterbuchse oder des Lageraußenringes ausgeglichen werden, da dann die axiale Länge des aufgeweiteten Bereiches des Lageraußenringes nicht mehr mit der des Buchsenabschnittes der Adapterbuchse übereinstimmt, so daß die Schnappverbindung wirkungslos ist (Buchsenabschnitt zu lang) oder nicht mehr funktioniert (Buchsenabschnitt zu kurz). Es ist deshalb erforderlich, für unterschiedliche Tretlagergehäuselängen jeweils passende Lageraußenringe vorrätig zu halten. Ein weiterer Nachteil liegt darin, daß die Abdichtung des bekannten Tretlagers unvollkommen ist und die technischen Möglichkeiten nicht ausnutzt.

Es ist die Aufgabe der vorliegenden Erfindung, eine Tretlagereinheit der im Oberbegriff des Anspruches 1 genannten Art zu schaffen, bei der mit einfachen konstruktiven Mitteln eine gegenüber dem Stand der Technik einfachere Anpassung an unterschiedliche Tretlagergehäuselängen möglich ist und gleichzeitig eine verbesserte Abdichtung erreichbar ist.

Diese Aufgabe ist erfindungsgemäß durch die im Anspruch 1 beschriebenen Merkmale gelöst.

Der Übergang vom Buchsenabschnitt zum inneren Flanschabschnitt ist durch eine radial nach innen vorspringende Ringschulter gebildet, deren Stirnfläche eine Anlageschulter für eine Abstützung am Lageraußenring bildet. Zur Anpassung der Tretlagereinheit an unterschiedliche Tretlagergehäuselängen werden die Ringschultern, ausgehend von einer Ausführung für die kleinste vorkommende Tretlagergehäuselänge, für größere Gehäuselängen durch eingelegte Beilagringe angepaßt. Da die Adapterbuchsen im Gegensatz zum Lageraußenring keine verschleißfesten Teile sein müssen, können sie aus einfachen und preiswerten Werkstoffen, beispielsweise aus Kunststoff hergestellt sein.

Gleichzeitig begrenzt die zylindrische Innenfläche der Ringschulter zusammen mit der Tretlagerwelle einen Ringraum zur Aufnahme einer Ringdichtung, die vorzugsweise eine schleifende Dichtung ist. Es hat sich gezeigt, daß die durch den inneren Flanschabschnitt gegenüber der Tretlagerwelle gebildete Spaltdichtung in Verbindung mit der beschriebenen Ringdichtung eine weitaus bessere Dichtwirkung hat als die bekannte Lösung. Dabei ist die geringe Länge der Spaltdichtung ausreichend, um groben Schmutz fernzuhalten; die Ringdichtung bildet darüberhinaus eine wirksame Abdichtung gegen Staub und Wasser.

In weiterer Ausgestaltung der Erfndung ist vorgesehen, daß zusätzlich in den Endbereichen des Lageraußenringes jeweils axial außerhalb des zugeordneten Wälzlagerringes eine Lippendichtung angeordnet ist. Diese stellt einerseits eine weitere Abdichtung gegen von außen eindringende schädliche Substanzen dar; andererseits erlaubt sie, den Lageraußenring mit einem dauerschmierenden Fett zu füllen, welches durch die Lippendichtungen daran gehindert wird, nach außen zu treten.

Um die Lagerabdichtung weiter zu verbessern, ist in einer weiteren Ausgestaltung der Erfindung vorgesehen, daß die Tretlagerwelle jeweils im Bereich des jeweiligen Endflansches der Adapterbuchsen feinbearbeitet ist und der innere Flanschabschnitt die Tretlagerwelle mit enger Toleranz umgibt.

Bei Anwendung aller beschriebenen Maßnahmen läßt sich eine Tretlagereinheit mit einer auch bei einem Einsatz in rauhem Gelände für die ganze Lebensdauer wirksamen Schmierung schaffen.

Die Ringdichtung kann beispielsweise ein trockener oder ölgetränkter bzw. grafitierter Filzring sein, der an der Tretlagerwelle anliegt. Ein ölgetränkter bzw. grafitierter Filzring hat gegenüber einem trockenen Filzring verbesserte Gleit- sowie Verschleißeigenschaften.

Die Ringdichtung kann in anderer Ausgestaltung der Erfindung auch ein gummiartiger Ring mit einer oder mehreren radial nach innen gerichteten Lippen sein. Auch derartige Ringdichtungen lassen sich an die dieser im gesamten Dichtungskonzept zugewiesene Aufgabe, nämlich feineren Staub und Wasser fernzuhalten, ideal anpassen.

Die im Außenring angeordneten Lippendichtungen sind vorzugsweise schleifende Lippendichtungen (sogenannte RS-Dichtungen = Radial Seal). Da sie durch die vorgeschaltete äußere Spaltdichtung sowie die Ringdichtung gegen Schmutz und Wasser weitgehend geschützt sind, ist ein Verschleiß dieser Lippendichtungen im wesentlichen nicht zu erwarten. In einer anderen Ausgestaltung der Erfindung können die im Außenring angeordneten Lippendichtungen auch als beispielsweise engtolerierte Spaltdichtungen ausgebildet sein.

Wie bereits weiter vorne ausgeführt wurde, ist vorgesehen, daß die axiale Länge der Ringschulter der jeweiligen Adapterbuchsen veränderbar ausgebildet ist, um sie z.B. in der beschriebenen Weise an unterschiedliche Tretlagergehäuselängen anzupassen. Es ist vorgesehen, die axiale Länge der Ringschulter durch Beilagringe auszugleichen. Beilagringe sind in den unterschiedlichsten Abmessungen und Toleranzen marktübliche Bauelemente, so daß die Verwendung von Beilagringen zur Veränderung der axialen Länge der Ringschulter eine besonders preiswerte Lösung darstellt. Bei einer Verwendung von Beilagringen kann erfindungsgemäß zusätzlich vorgesehen sein, daß diese jeweils eine die Tretlagerwelle mit enger Toleranz umgebende zentrale Öffnung haben. Sie bilden damit eine weitere Spaltdichtung, die die Abdichtung der Lager zusätzlich verbessert.

Die erfindungsgemäße Konstruktion bietet auch die Möglichkeit, eventuelle Maßabweichungen bei den Tretlagergehäusen, die der Hersteller der Tretlagereinheit nicht beeinflussen kann, elastisch auszugleichen; zu diesem Zweck ist erfindungsgemäß vorgesehen, daß zwischen der Stirnfläche der Ringschulter der jeweiligen Adapterbuchse und der zugeordneten Stirnfläche des Lageraußenringes ein Federelement, beispielsweise eine Tellerringfeder einlegbar ist, mit welchem eventuelle Maßabweichungen der Tretlagergehäuse spielfrei ausgeglichen werden können.

Dem gleichen Ziel dient auch die gegebenfalls zusätzliche Maßnahme, wenigsten einen Endabschnitt des Lageraußenringes jeweils schneidenartig nach außen zulaufend auszubilden. Bei der Montage der Adapterbuchsen kann sich der schneidenartige Endabschnitt des aus hartem Material bestehenden Lageraußenringes in die im allgemeinen aus einem weicheren Material gebildete Stirnfläche der Ringschulter mehr oder weniger weit einschneiden, so daß auch auf diese Weise geringfügige Maßabweichungen in der Länge des Tretlagergehäuses ausgeglichen werden können.

Weitere Einzelheiten, Vorteile und Merkmale ergeben sich aus der folgenden Beschreibung und der Zeichnung, auf die bezüglich der Offenbarung aller nicht im Text beschriebenen Einzelheiten ausdrücklich verwiesen wird. Ausführungsbeispiele der Erfindung sind in der Zeichnung dargestellt und im folgenden näher beschrieben. Es zeigen:
- Fig. 1: einen Längsschnitt durch eine in ein Tretlagergehäuse eingebaute Tretlagereinheit, wobei beiderseits der vertikalen Mittellinie unterschiedliche Ausführungen dargestellt sind;
- Fig. 2: eine Darstellung entsprechend der Fig. 1, wobei die Möglichkeiten einer Anpassung an andere Tretlagergehäuselängen sowie eines axialen Versatzes der Tretlagereinheit im Tretlagergehäuse dargestellt sind;
- Fig. 3: eine Anordnung etwa gemäß der Fig. 1, wobei beiderseits der vertikalen Mittellinie unterschiedliche Ausgestaltungen dargestellt sind;

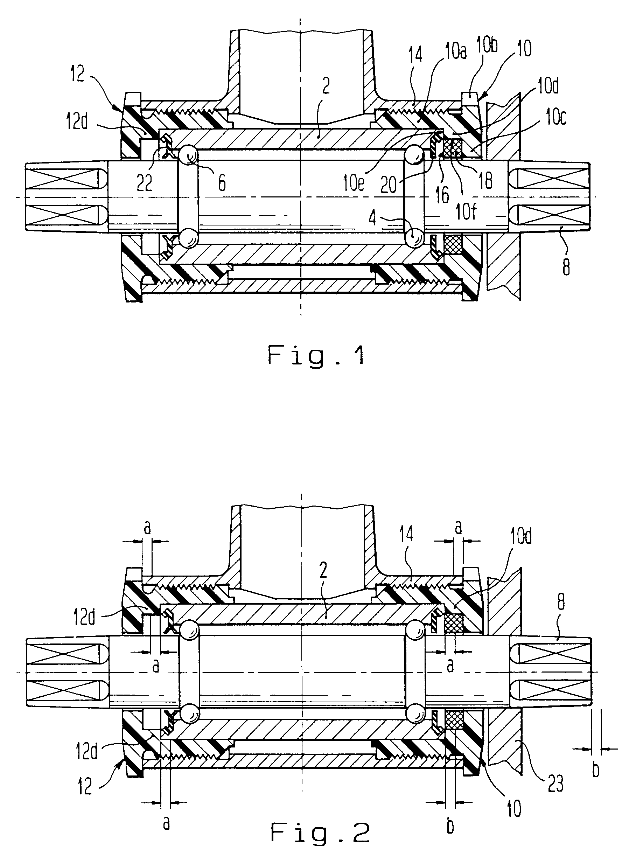

Die in der Figur 1 dargestellte Tretlagereinheit umfaßt einen hülsenartigen Lageraußenring 2, in welchem über in dessen Endbereichen angeordnete Wälzlagerring-Anordnungen 4, 6 eine Tretlagerwelle 8 gelagert ist. Auf die Endbereiche des Lageraußenringes 2 sind Adapterbuchsen 10, 12 aufgesetzt, die ihrerseits in bekannter Weise in ein hülsenförmiges Tretlagergehäuse 14 eingepreßt oder eingeschraubt sind.

Die Adapterbuchsen 10, 12 sind im wesentlichen gleich aufgebaut; sie unterscheiden sich gegebenenfalls lediglich in der wirksamen axialen Länge einer später genauer zu beschreibenden Anlageschulter, die sich an der jeweiligen Stirnfläche des Lageraußenringes 2 abstützt.

Im folgenden wird die Adapterbuchse 10 genauer beschrieben. Sie hat einen axialen Buchsenabschnitt 10a, der im wesentlichen spielfrei auf den Lageraußenring 2 aufschiebbar ist, sowie einen Endflansch mit einem äußeren Flanschabschnitt 10b und einem inneren Flanschabschnitt 10c. Der äußere Flanschabschnitt 10b legt sich im montierten Zustand der Tretlagereinheit an die zugeordnete Stirnseite des Tretlagergehäuses 14 an. Der innere Flanschabschnitt 10c erstreckt sich radial nach innen bis zu Tretlagerwelle 8 und umgreift diese.

Der Übergang vom Buchsenabschnitt 10a zum inneren Flanschabschnitt 10c ist durch eine nach innen vorspringende Ringschulter 10d gebildet, deren Stirnfläche 10e eine Anlageschulter für eine Abstützung am Lageraußenring 2 darstellt und deren zylindrische Innenfläche 10f die radial äußere Begrenzung eines Ringraumes 16 bildet. Der Ringraum 16 nimmt eine Ringdichtung 18 auf.

Fig. 1 zeigt eine Anordnung für die kürzeste vorkommende Tretlagergehäuselänge, bei der keine Beilagringe erforderlich sind. Bei größeren Gehäuselängen wird der sich ergebende Abstand zwischen Ringschulter und Außenlagerring durch Beilagringe ausgeglichen.

Die in der Figur 1 rechts der Mittellinie dargestellte Lageranordnung weist eine dreistufige Abdichtung auf. Dazu ist die Tretlagerwelle 8 zumindest im Bereich des Endflansches bzw. des inneren Flanschabschnittes 10c feinbearbeitet, beispielsweise feingeschliffen. Dadurch wird es möglich, den inneren Flanschabschnitt 10c so auszubilden, daß er die Tretlagerwelle 8 mit enger Toleranz umgibt, wodurch an dieser Stelle eine äußerst wirksame Spaltdichtung geschaffen wird. Diese gewährleistet im wesentlichen, daß gröberer Schmutz nicht hindurchtreten kann.

Die Ringdichtung 16, die im dargestellten Ausführungsbeispiel als Filzringdichtung ausgebildet ist, liegt vorzugsweise schleifend auf der Tretlagerwelle 2 auf und verhindert auf diese Weise einen Durchtritt von feinerem Staub sowie von Wasser oder dergleichen. Um die Dichtwirkung sowie die Gleiteigenschaften der Ringdichtung 16 zu verbessern, kann sie ölgetränkt oder grafitiert sein.

Im Endbereich des Lageraußenringes 2 axial außerhalb des zugeordneten Wälzlagerringes 4 ist eine Lippendichtung 20 angeordnet. Im vorliegenden Fall ist sie als nicht schleifende Lagerdichtung ausgebildet, die die Tretlagerwelle 8 mit enger Toleranz umgibt. Sie dichtet einerseits den Wälzlagerring 4 zusätzlich nach außen ab, andererseits verhindert sie gegebenenfalls den Austritt eines im Lageraußenring angeordneten Dauerschmiermittels, beispielsweise Fett.

Die in Figur 1 links der Mittellinie dargestellte Lageranordnung entspricht im wesentlichen der zuvor beschriebenen Lageranordnung. Dabei ist jedoch in dem radial innerhalb der Ringschulter 12d keine Ringdichtung dargestellt; diese kann beispielsweise dann entfallen, wenn das Tretlager in ein Fahrrad eingebaut wird, welches in unkritischer Umgebung, beispielsweise in einer Halle eingesetzt wird.

Außerdem ist als Lippendichtung 22 eine schleifende Lippendichtung mit zwei Lippen vorgesehen, die zumindest teilweise die Funktion einer eventuell nicht eingebauten Ringdichtung mit übernehmen kann.

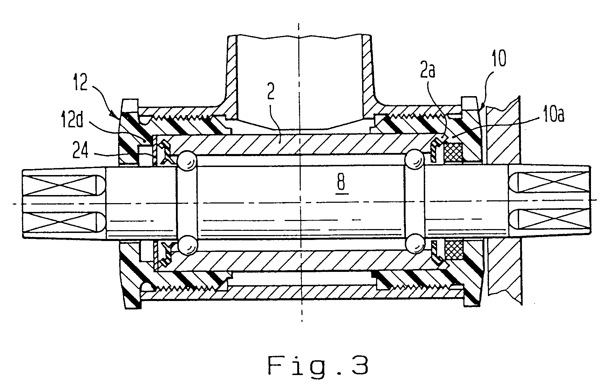

Figur 2 zeigt eine Anordnung gemäß der Figur 1, an der im oberen Teil der Figur schematisch erläutert werden soll, wie die Tretlagereinheit an eine geänderte Tretlagergehäuselänge angepaßt werden kann. Wenn das Tretlagergehäuse 14 beispielsweise an beiden Seiten gegenüber der ursprünglichen, dargestellter Länge um den Betrag a länger ist, so genügt es, auch die Ringschultern 12d um diesen Betrag a zu verlängern, um die Tretlagereinheit an die längere Tretlagergehäuselänge anzupassen. Auf diese Weise brauchen die wesentlichen, herstellungstechnisch aufwendigen und teueren Bestandteile der Tretlagereinheit, insbesondere der Lageraußenring 2 nicht geändert zu werden. Der Abschnitt a wird in der Praxis durch Beilagringe erzeugt, wie z.B. in Figur 3 durch 24.

In dem in Figur 2 unteren Teil der Darstellung wird die Möglichkeit erläutert, die Tretlagereinheit in axialer Richtung zu versetzen, um beispielsweise den auf der Tretlagerwelle 8 angeordneten vorderen Zahnkranz 23 zum hinteren Zahnkranz auszurichten. Wenn die Tretlagerwelle in Figur 2 beispielsweise um den Betrag b nach rechts verschoben werden soll, so genügt es, die Ringschulter 10d der rechten Adapterbuchse 10 um den gleichen Betrag b zu kürzen und die Adapterbuchse 12 durch eine Adapterbuchse zu ersetzen, deren Ringschulter 12d um den Betrag b länger ist.

Dazu wird ein Beilagring zwischen die Adapterbuchse und den Lageraußenring eingelegt.

Figur 3 zeigt links der Mittellinie ein Ausführungsbeispiel, bei welchem zwischen der Adapterbuchse 12 und dem Lageraußenring 2 ein Beilagring 24 angeordnet ist, welcher wie eine Verlängerung der Ringschulter 12d wirkt. Wie Figur 3 erkennen läßt, ist der Beilagring 24 so ausgebildet, daß er die Tretlagerwelle 8 mit enger Toleranz umgibt, so daß er eine zusätzliche Spaltdichtung bildet, die die Gesamtabdichtung des Lagers weiter verbessert.

Anstelle des Beilagringes 24 kann, wie nicht eigens dargestellt wurde, ein Federringelement, z.B. eine Tellerringfeder oder eine Schraubenfeder vorgesehen sein, durch welches eine eventuelle Maßungenauigkeit des Lageraußenringes 2 spielfrei ausgeglichen werden kann.

In Figur 3 ist rechts der vertikalen Mittellinie eine weitere Ausgestaltung gezeigt. Der rechte Endabschnitt 2a des Lageraußenringes 2 ist schneidenartig nach außen zulaufend ausgebildet. Er kann sich beim Aufpressen oder Aufschrauben der Adapterbuchse 10 deshalb bis zu einem gewissen Grade in die Stirnfläche der Ringschulter 10d eindrücken, womit ebenfalls ein gewisser Ausgleich von Maßungenauigkeiten des Lageraußenringes 2 (oder der Adapterbuchse 10) erreicht werden kann.

## Patentansprüche

1. Tretlagereinheit für Fahrräder, umfassend einen hülsenartigen Lageraußenring (2), in welchem über in dessen Endbereichen angeordnete Wälzlagerring-Anordnungen eine Tretlagerwelle (8) gelagert ist, sowie auf den Endbereichen des Lageraußenringes (2) angeordnete Adapterbuchsen (10, 12), die jeweils einen auf den Außenring aufschiebbaren, axialen Buchsenabschnitt (10a) und einen Endflansch mit einem äußeren (10b), zur Anlage an einem Tretlagergehäuse (14) bestimmten Flanschabschnitt und einem inneren (10c), die Tretlagerwelle (8) umgreifenden Flanschabschnitt haben, wobei der Übergang vom Buchsenabschnitt (10a) zum inneren Flanschabschnitt (10c) durch eine radial nach innen vorspringende Ringschulter (10d) gebildet ist, deren Stirnfläche (10e) eine Anlageschulter für eine Abstützung am Lageraußenring (2) bildet und deren zylindrische Innenfläche (10f) die radial äußere Begrenzung eines zwischen der Adapterbuchse (10) und der Tretlagerwelle (8) ausgebildeten Ringraumes (16) bildet, dadurch **gekennzeichnet,** daß die wirksame axiale Länge der Ringschulter (10d) durch an deren Stirnfläche anlegbare Beilagringe (24) veränderbar und die Adapterbuchse (10) in unterschiedliche, durch die jeweiligen wirksame Länge der Ringschulter (10d) vorgegebene axiale Betriebsstellungen auf dem Lageraußenring (2) positionierbar ist, und daß der Ringraum (16) zur Aufnahme einer vorzugsweise elastischen Ringdichtung (18) vorgesehen ist.

2. Tretlagereinheit nach Anspruch 1, dadurch **gekennzeichnet**, daß die Beilagringe (24) jeweils eine die Tretlagerwelle mit enger Toleranz umgebende zentrale Öffnung haben.

3. Tretlagereinheit nach einem der Ansprüche 1 und 2, dadurch **gekennzeichnet**, daß zwischen der Stirnfläche der Ringschulter (12d) und der zugeordneten Stirnfläche des Lageraußenringes (2) eine Spielausgleichsfeder (24) angeordnet ist.

4. Tretlagereinheit nach einem der Ansprüche 1 bis 3, dadurch **gekennzeichnet**, daß die Endabschnitte (2a) des Lageraußenringes (2) jeweils schneidenartig nach außen zulaufend ausgebildet sind.

5. Tretlagereinheit nach einem der Ansprüche 1 bis 4, dadurch **gekennzeichnet**, daß in den Endbereichen des Lageraußenringes (2) jeweils axial außerhalb des zugeordneten Wälzlagerringes (4, 6) eine Lippendichtung (20, 22) angeordnet ist.

6. Tretlagereinheit nach einem der Ansprüche 1 bis 5, dadurch **gekennzeichnet**, daß die Tretlagerwelle (8) zumindest im Bereich des jeweiligen Endflansches (10b, 10c) der Adapterbuchse (10) feinbearbeitet ist und der innere Flanschabschnitt (10c) die Tretlagerwelle (8) mit enger Toleranz umgibt.

7. Tretlagereinheit nach einem der Ansprüche 1 bis 6, dadurch **gekennzeichnet**, daß die Ringdichtung (18) ein trockener oder ölgetränkter bzw. grafitierter Filzring ist.

8. Tretlagereinheit nach einem der Ansprüche 1 bis 6, dadurch **gekennzeichnet**, daß die Ringdichtung ein gummiartiger Ring mit einer oder mehreren radial nach innen gerichteten Lippen ist.

9. Tretlagereinheit nach einem der Ansprüche 5 bis 8, dadurch **gekennzeichnet**, daß die im Außenring angeordneten Lippendichtungen (22) schleifende Lippendichtungen sind (RS-Dichtungen).

10. Tretlagereinheit nach einem der Ansprüche 5 bis 8, dadurch **gekennzeichnet**, daß die im Außenring angeordneten Lippendichtungen (20) als Spaltdichtungen ausgebildet sind (L-Dichtungen).

## Claims

1. A bottom bracket unit for bicycles, comprising a sleeve-like bearing outer race (2) in which a bottom bracket shaft (8) is mounted by way of rolling bearing race arrangements disposed in the end regions of the bearing outer race (2), and adaptor bushes (10, 12) which are arranged on the end regions of the bearing outer race (2) and which each have an axial bush portion (10a) which can be pushed on to the outer race and an end flange with an outer flange portion (10b) intended to bear against a bottom bracket housing (14) and an inner flange portion (10c) which embraces the bottom bracket shaft (8), wherein the transition from the bush portion (10a) to the inner flange portion (10c) is formed by a radially inwardly projecting annular shoulder (10d) whose end face (10e) forms a contact shoulder for a support effect at the bearing outer race (2) and whose cylindrical inside face (10f) forms the radially outward boundary of an annular space (16) which is formed between the adaptor bush (10) and the bottom bracket shaft (8), characterised in that the effective axial length of the annular shoulder (10d) is variable by shim rings (24) which can be applied to the end face of the annular shoulder and the adaptor bush (10) can be positioned on the bearing outer race (2) in different axial operative positions which are predetermined by the respective effective length of the annular shoulder (10d), and that the annular space (16) is provided for accommodating a preferably elastic annular seal (18).

2. A bottom bracket unit according to claim 1 characterised in that the shim rings (24) each have a central opening which is disposed with a close tolerance around the bottom bracket shaft.

3. A bottom bracket unit according to one of claims 1 and 2 characterised in that a play-compensating spring (24) is arranged between the end face of the annular shoulder (12d) and the associated end face of the bearing outer race (2).

4. A bottom bracket unit according to one of claims 1 to 3 characterised in that the end portions (2a) of the bearing outer race (2) are each of a configuration such as to converge outwardly in a cutting edge-like shape.

5. A bottom bracket unit according to one of claims 1 to 4 characterised in that a respective lip seal (20, 22) is arranged in the end regions of the bearing outer race (2) axially outside the associated rolling bearing race (4, 6).

6. A bottom bracket unit according to one of claims 1 to 5 characterised in that the bottom bracket shaft (8) is finely machined at least in the region of the respective end flange (10b, 10c) of the adaptor bush (10) and the inner flange portion (10c) surrounds the bottom bracket shaft (8) with a close tolerance.

7. A bottom bracket unit according to one of claims 1 to 6 characterised in that the annular seal (18) is a dry or oil-impregnated or graphited felt ring.

8. A bottom bracket unit according to one of claims 1 to 6 characterised in that the annular seal is a rubber-like ring with one or more radially inwardly directed lips.

9. A bottom bracket unit according to one of claims 5 to 8 characterised in that the lip seals (22) arranged in the outer race are rubbing lip seals (RS-seals).

10. A bottom bracket unit according to one of claims 5 to 8 characterised in that the lip seals (20) arranged in the outer race are in the form of clearance seals (L-seals).

## Revendications

1. Unité de palier de pédalier pour vélos, comprenant une bague externe de palier (2) semblable à un manchon, dans laquelle est logé un arbre de palier de pédalier (8) au moyen d'arrangements de bague de palier à roulement disposés dans les zones d'extrémité de ladite bague de palier de pédalier, ainsi que des douilles d'adaptation (10, 12) disposées sur les zones d'extrémité de la bague externe de palier (2), lesdites douilles d'adaptation ayant respectivement une section de douille axiale (10a) emmanchable sur la bague externe et une bride d'extrémité comprenant une section de bride externe (10b) destinée à reposer sur un boîtier de palier de pédalier (14) et une section de bride interne (10c) entourant l'arbre de palier de pédalier (8), le passage de la section de douille (10a) vers la section de bride interne (10c) étant formé par un épaulement annulaire (10d) faisant saillie radialement vers l'intérieur, dont la surface frontale (10e) forme un épaulement de butée pour un appui sur la bague externe de palier (2), et dont la surface intérieure (10f) cylindrique forme la limite extérieure radiale d'un espace annulaire (16) réalisé entre la douille d'adaptation (10) et l'arbre de palier de pédalier (8), caractérisée en ce que la longueur axiale utile de l'épaulement annulaire (10d) peut être modifiée au moyen de bagues de réglage (24) pouvant être disposées sur sa surface frontale et la douille d'adaptation (10) est positionnable sur la bague externe de palier (2) à des positionnements de fonctionnement axiaux prédéterminés différents au moyen de la longueur utile respective de l'épaulement annulaire (10d), et en ce que l'espace annulaire(16) est prévu pour recevoir une garniture d'étanchéité annulaire (18) de préférence élastique.

2. Unité de palier de pédalier selon la revendication 1, caractérisée en ce que les bagues de réglage (24) comportent respectivement une ouverture centrale entourant l'arbre de palier de pédalier avec une faible tolérance.

3. Unité de palier de pédalier selon l'une des revendications 1 et 2, caractérisée en ce que entre la face frontale de l'épaulement annulaire (12d) et la face frontale correspondante de la bague externe de palier (2) est disposé un ressort de compensation de jeu (24).

4. Unité de palier de pédalier selon l'une des revendications 1 à 3, caractérisée en ce que les sections d'extrémité (2a) de la bague externe de palier (2) se terminent vers l'extérieur respectivement en pointe sous forme de découpe.

5. Unité de palier de pédalier selon l'une des revendications 1 à 4, caractérisée en ce que, dans les zones d'extrémité de la bague externe de palier (2), une garniture d'étanchéité à lèvres (20, 22) est respectivement disposée axialement en dehors de la bague de palier de roulement correspondante (4, 6).

6. Unité de palier de pédalier selon l'une des revendications 1 à 5, caractérisée en ce que l'arbre de palier de pédalier (8) est usiné fin au moins dans la zone de la bride d'extrémité respective (10b, 10c) de la douille d'adaptation (10) et la section de la bride interne (10c) entoure l'arbre de palier de pédalier (8) avec une tolérance faible.

7. Unité de palier de pédalier selon l'une des revendications 1 à 6, caractérisée en ce que la garniture d'étanchéité annulaire (18) est un anneau de feutre sec ou imprégné d'huile respectivement graphité.

8. Unité de palier de pédalier selon l'une des revendications 1 à 6, caractérisée en ce que la garniture d'étanchéité annulaire (18) est un anneau gommeux comportant une ou plusieurs lèvres dirigées radialement vers l'intérieur.

9. Unité de palier de pédalier selon l'une des revendications 5 à 8, caractérisée en ce que les garnitures d'étanchéité à lèvres (22) disposées dans la bague externe sont des garnitures d'étanchéité à lèvres frottantes (garniture d'étanchéité RS).

10. Unité de palier de pédalier selon l'une des revendications 5 à 8, caractérisée en ce que les garnitures d'étanchéité à lèvres (20) disposées dans la bague externe sont réalisées sous la forme de garnitures d'étanchéité à fente (garniture d'étanchéité L).
